# EUROPEAN PATENT SPECIFICATION

(11) **EP 4 570 553 B1**
(45) Date of publication and mention of the grant of the patent: **30.09.2026**
(21) Application number: 24217788.9
(22) Date of filing: 05.12.2024
(51) Int. Cl.: B60K 35/10, B60K 35/22, B60K 35/81

(54) **SCREEN TRANSITION CONTROL SYSTEM AND WORK VEHICLE**
ANZEIGEÜBERGANGSSTEUERUNGSSYSTEM UND ARBEITSFAHRZEUG
SYSTÈME DE COMMANDE DE TRANSITION D'AFFICHAGE ET VÉHICULE DE TRAVAIL

(30) Priority: 14.12.2023 JP 2023211084
(43) Date of publication of application: 18.06.2025
(73) Proprietor: Kubota Corporation, Osaka-shi, Osaka 530-0011 (JP)
(72) Inventor: NAGAYAMA, Takashi, SAKAI-SHI, OSAKA, 5900908 (JP); TSUJIKAWA, Shotaro, SAKAI-SHI, OSAKA, 5900908 (JP); KATO, Takahiro, SAKAI-SHI, OSAKA, 5900908 (JP); WADA, Yamato, SAKAI-SHI, OSAKA, 5900908 (JP); AKIYAMA, Nozomu, SAKAI-SHI, OSAKA, 5900908 (JP)
(74) Representative: Cabinet Beau de Loménie

(56) References cited:
- JP-A- 2013 092 891
- US-A1- 2013 030 660
- US-A1- 2017 154 608

## Description

### Technical Field

The present invention relates to a screen transition control system for causing transition of one screen to another to sequentially display items of information on a work vehicle and to a work vehicle including such a screen transition control system.

### Background Art

Patent Literature 1 discloses an information display device for a work vehicle. The information display device has a transition display mode and an information change mode. In the transition display mode, the information display device causes a display to sequentially display two or more information display screens such as an hour meter display screen, a trip meter display screen, and a mileage meter display screen in response to a first operation. In the information change mode, the information display device allows the user to change the current setting corresponding to the information display screen being displayed on the display. The information display device is configured to transition from the transition display mode to the information change mode in response to a second operation.

### Prior Art Documents

### Patent Documents

Patent Document 1: JP 2013-30002 A

### Disclosure of the Invention

### Problem to be Solved by the Invention

Information on a work vehicle varies widely, leading to various and numerous information display screens to be displayed on a display panel. Further, a work vehicle may have two or more work vehicle operation modes (such as an eco-friendly mode and a standard mode) with top control priority (that is, high in the hierarchy). Such a work vehicle may be configured to perform through an information display screen a process that varies according to the current work vehicle operation mode. The control section responsible for controlling the information display screens needs to correctly recognize the current work vehicle operation mode and the current information display screen that the display panel is displaying. If the control section fails to correctly recognize the currently displayed information display screen, the operator's operation on an information display screen may result in something unintended by the operator.

To deal with the above issue, there has been a demand for a simple control technique for correctly identifying the current information display screen that a display panel is displaying, while information display screens on the display panel transition.

### Means for Solving Problem

A screen transition control system according to the present invention for sequentially displaying items of information on a work vehicle includes: an operation signal processor configured to generate operation data based on at least one particular operation of an operation member; a display panel configured to display as a selected screen an information display screen selected from among a plurality of information display screens in a screen set; a screen manager configured to provide a screen identifier manager with a screen identifier assigned to the selected screen; and a display instruction generator configured to generate, based on the screen identifier from the screen identifier manager and the operation data, a display instruction including information to be displayed, the screen manager being further configured to provide the display panel with a display signal for displaying an information display screen determined based on the display instruction.

The above configuration allows an information display screen as the selected screen to be assigned with a screen identifier for identifying the information display screen. A particular operation on the selected screen causes the display instruction generator to receive operation data based on the particular operation and the screen identifier. The display instruction generator, on the basis of the operation data and the screen identifier, performs a process triggered by the particular operation (for example, generates a display instruction for displaying a subsequent information display screen in the order of screen transition or processes data on the basis of the selected screen). Even if the set of information display screens are configured hierarchically, the management of screen identifiers allows the screen transition control system to correctly recognize the screen currently displayed on the display panel, that is, the selected screen on which a particular operation has been performed.

The set of information display screens include two or more similar ones with an identical purpose of display. Grouping such similar information display screens and assigning a common screen identifier (group identifier) thereto reduces the control load for screen identification. The screen transition control system may thus be configured such that the plurality of information display screens are divided into a plurality of groups according to a purpose of display, each of the plurality of groups including a plurality of information display screens assigned with a common screen identifier.

Many work vehicles have different operation modes such as an eco-friendly mode, a standard mode, a boost mode, and a simple mode. Such operation modes have the highest priority among other settings and belong to the highest layer of control priority. For such work vehicles, grouping a set of information display screens in a hierarchy advantageously allows a clear control configuration and display control. The screen transition control system may thus be configured such that the plurality of groups include a prioritized group including a plurality of prioritized screens prioritized at a start of the screen transition control system, and one of the plurality of prioritized screens that has been selected as the selected screen allows selection of an operation mode for the work vehicle.

A selected screen that may be transitioned to different information display screens needs to be capable of receiving accordingly different particular operations. The screen transition control system may thus be configured such that the at least one particular operation includes a first particular operation and a second particular operation both on a single selected screen, the first particular operation causing the display panel to display a first selected screen, the second particular operation causing the display panel to display a second selected screen different from the first selected screen. The at least one particular operation may further include third and subsequent particular operations if the selected screen may be transitioned to three or more information display screens.

For a specific example of the particular operation, the screen transition control system may be configured such that the operation member is a single push switch, and the screen transition control system discriminates between the first particular operation and the second particular operation based on a length of time during which the operation member is pressed. This configuration allows an operator to use only one push switch to perform two or more particular operations, thereby providing the benefits of simplified operations and reduced costs.

The screen transition control system may preferably be configured such that the screen identifier manager and the display instruction generator are included in a control unit connected to a group of sensors and a group of devices, and the display panel and the screen manager are included in an operation meter panel unit connected to the control unit in such a manner as to be capable of exchanging data with the control unit. This configuration allows the control unit to include the core elements for controlling screen display. This reduces the amount of data communicated between the control unit and the operation meter panel unit, and allows simple communication control. Further, the display instruction generator is included in the control unit, which includes a vehicle control system for travel control and the like. This advantageously facilitates the display instruction generator cooperating with the vehicle control system.

The present invention covers not only the screen transition control system described above, but also a work vehicle including the screen transition control system. The work vehicle enjoys the above-described various benefits of the screen transition control system.

### Brief Description of the Drawings

Fig. 1 is a side view of an electric mower in its entirety as an example work vehicle.
Fig. 2 is a plan view of an electric mower in its entirety.
Fig. 3 is a diagram schematically illustrating the motive power system and control system of an electric mower.
Fig. 4 is a plan view of a display panel and an operation panel.
Fig. 5 is a functional block diagram illustrating control function sections of the control system of a work vehicle.
Fig. 6 is a diagram illustrating a flow of data between different control function sections during a screen transition process.
Fig. 7 is a diagram illustrating how screens transition on a display panel.
Fig. 8 is a diagram illustrating how screens transition in the event of an error.
Fig. 9 is a diagram illustrating how screens transition in response to an operator performing an operation on a screen while driving the work vehicle to perform work.

### Best Mode for Carrying out the Invention

Unless otherwise stated, the present specification uses (i) the word "forward" to refer to the front side in the front-back direction (traveling direction) of the vehicle, (ii) the word "backward" to refer to the back side in the front-back direction of the vehicle, (iii) the terms "left-right direction" and "lateral direction" to refer to the transverse direction (width direction) of the vehicle, which is orthogonal to the front-back direction of the vehicle, and (iv) the words "upward" and "downward" to refer to a position in the vertical direction of the vehicle, that is, a height from the ground. The drawings show "F" to indicate "forward", "B" to indicate "backward", "L" to indicate "left", "R" to indicate "right", "U" to indicate "upward", and "D" to indicate "downward".

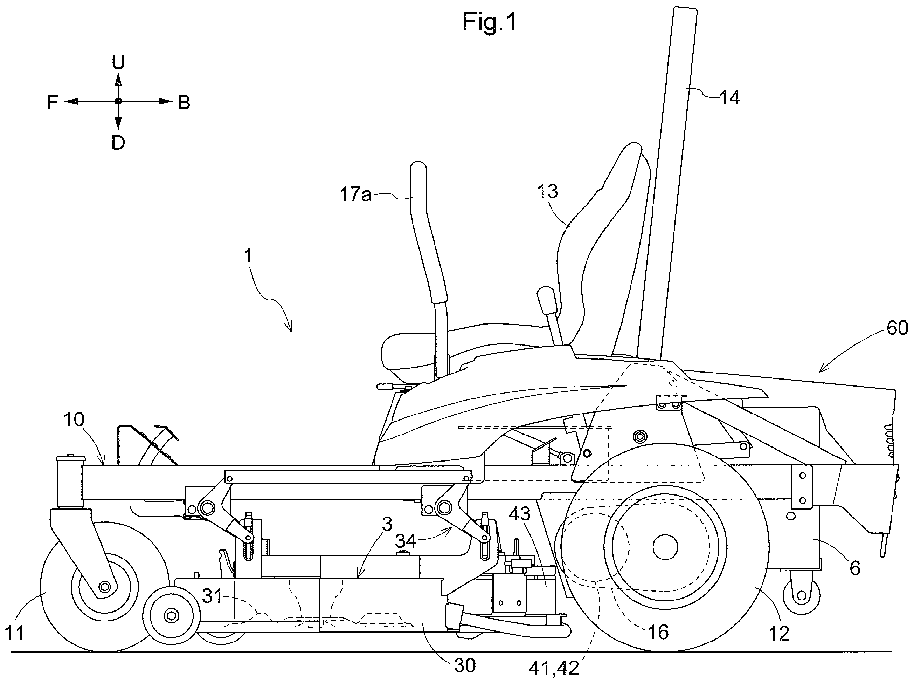

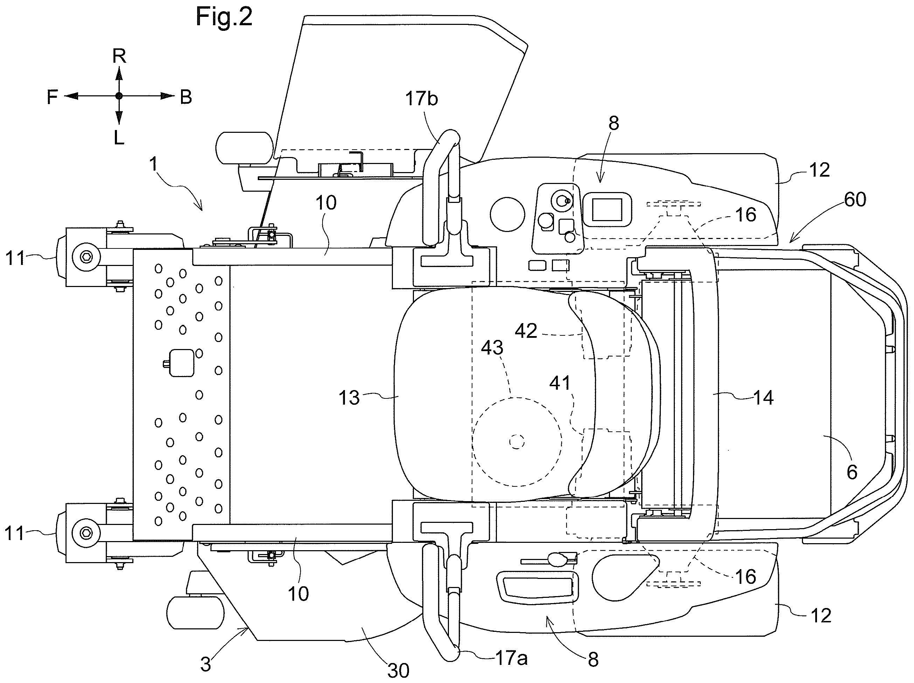

The description below deals with a work vehicle as an embodiment of the present invention, the work vehicle being an electric mower (hereinafter referred to as "work vehicle"). The work vehicle, as illustrated in Figs. 1 and 2, includes a body 1, a pair of left and right front wheels 11, a pair of left and right rear wheels 12, and a mower device 3. The front wheels 11 are held by a front portion of the body 1. The rear wheels 12 (drive wheel unit) are held by a back portion of the body 1. The mower device 3 (work device) is held by a lower portion of the body 1 between the front wheels 11 and the rear wheels 12. The work vehicle also includes a battery 6 and a device container 60 disposed between the left and right rear wheels 12 and containing components such as the battery 6. The body 1 is also provided with components such as a driver's seat 13 and a roll-over protective structure (ROPS) frame 14.

The body 1 includes a frame 10 including a pair of left and right longitudinal beams extending in the front-back direction and a cross beam coupling the two longitudinal beams to each other. The ROPS frame 14 has lower ends coupled to the frame 10.

The front wheels 11 are caster wheels, whereas the rear wheels 12 are drive wheels. The work vehicle includes a left travel motor 41 and a right travel motor 42 (travel electric motor). The left and right travel motors 41 and 42 are disposed inward of the respective rear wheels 12 and configured to transmit motive power to the respective rear wheels 12 through respective deceleration mechanisms 16 to drive the respective rear wheels 12 independently of each other.

As illustrated in Fig. 2, the work vehicle includes a pair of left and right fenders 8 to the left and right of the driver's seat 13. The work vehicle includes a left shift lever 17a (vehicle speed setter) and a right shift lever 17b (vehicle speed setter) to the respective opposite sides of the driver's seat 13 each for use to set a desired vehicle speed. Moving the right shift lever 17b to the neutral position causes the right travel motor 42 to stop. Moving the right shift lever 17b to the forward travel side causes the right travel motor 42 to rotate to the forward travel side. Moving the right shift lever 17b to the backward travel side causes the right travel motor 42 to rotate to the backward travel side. Moving the left shift lever 17a to the neutral position, the forward travel side, or the backward travel side causes the left travel motor 41 to operate similarly to the right travel motor 42. Moving the left and right shift levers 17a and 17b drives the left and right rear wheels 12 independently of each other to the forward or backward travel side, so that the work vehicle moves forward or backward or turns to the right or left.

As illustrated in Fig. 1, the mower device 3 (which is an example work device) includes a mower deck 30 and two or more blades 31 each disposed inside the mower deck 30 and held by the mower deck 30 in such a manner as to be rotatable about a vertical axis. The work vehicle includes a mower motor 43 (which is an example of the "work electric motor") configured to drive the blades 31 (which is an example of the "rotary blade") to rotate and a link mechanism 34 suspending the mower deck 30 from the frame 10 in such a manner that the mower deck 30 is capable of being lifted and lowered.

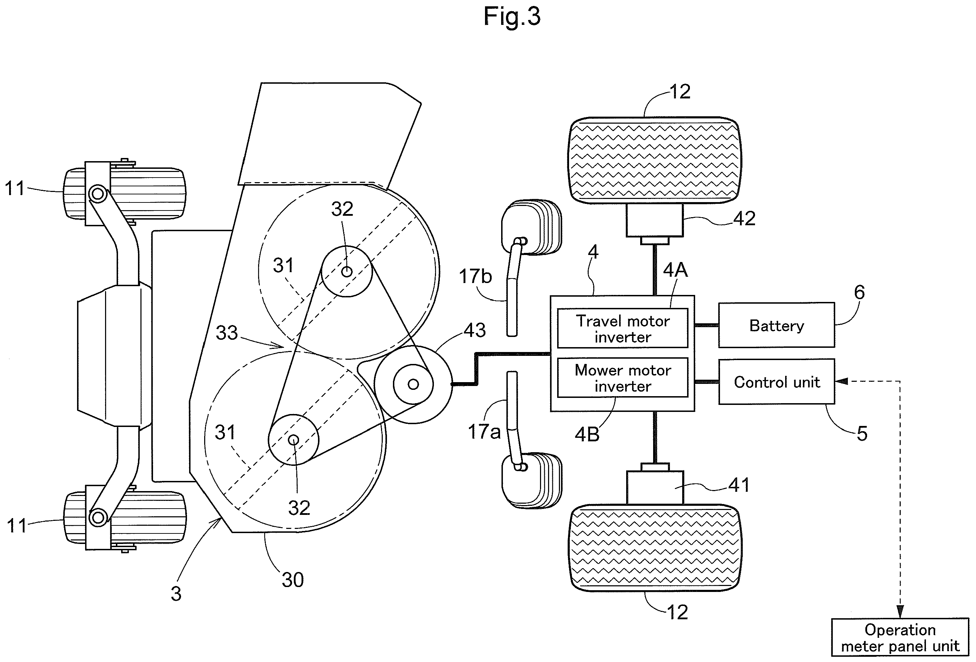

Fig. 3 illustrates the power motive system and control system of the work vehicle. The mower motor 43 is attached to a back wall of the mower deck 30, and configured to rotate, with use of a belt-based power transmission mechanism 33, respective rotary shafts 32 to which the blades 31 are attached. The left travel motor 41 is configured to rotate the left rear wheel 12, whereas the right travel motor 42 is configured to rotate the right rear wheel 12.

The work vehicle includes an inverter unit 4 and a control unit 5. The inverter unit 4 is configured to feed electric power to the left and right travel motors 41 and 42 and the mower motor 43. The inverter unit 4 includes two travel motor inverters 4A configured to feed electric power to the left and right travel motors 41 and 42 and a mower motor inverter 4B configured to feed electric power to the mower motor 43. The inverter unit 4 is drivable on the basis of a control signal from the control unit 5. The inverter unit 4 is connected to the battery 6 as an electric power source. One of the travel motor inverters 4A is for the left travel motor 41, whereas the other is for the right travel motor 42.

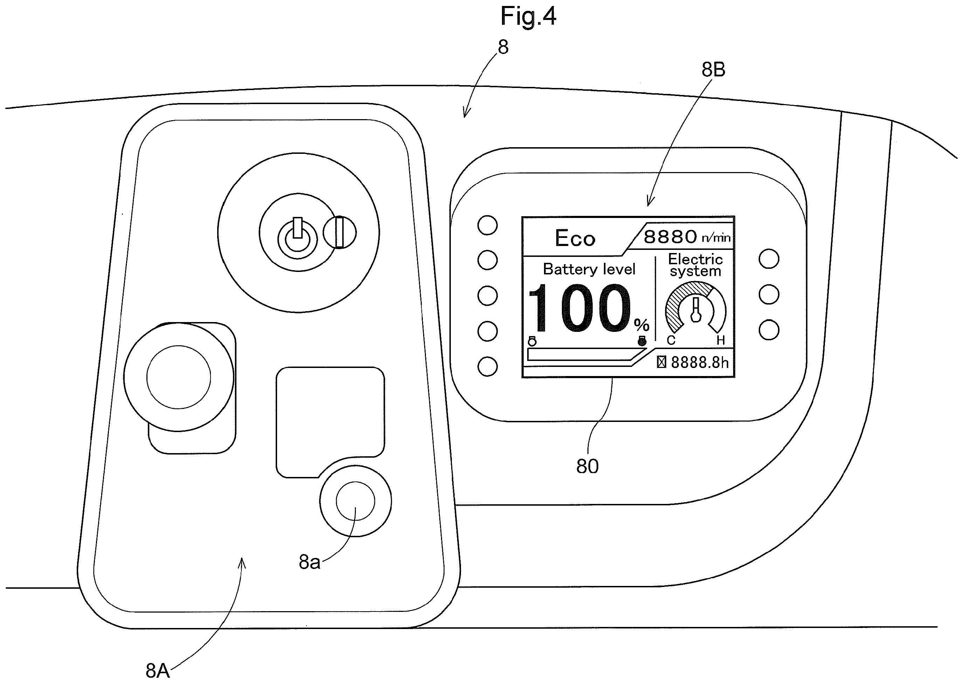

As illustrated in Fig. 4, the right fender 8 is provided with an operation meter panel unit including an operation panel 8A and a display panel 8B. The display panel 8B includes a liquid crystal display 80 configured to selectively display various items of information and a group of indicator lamps disposed to the opposite lateral sides of the liquid crystal display 80 and configured to indicate various vehicle states. The operation panel 8A includes a group of operable devices such as a switch and a dial each for use to operate an operation device mounted on the work vehicle. The group of operable devices include an operation member 8a for use to select information to be displayed on the liquid crystal display 80 and a driving mode for the work vehicle.

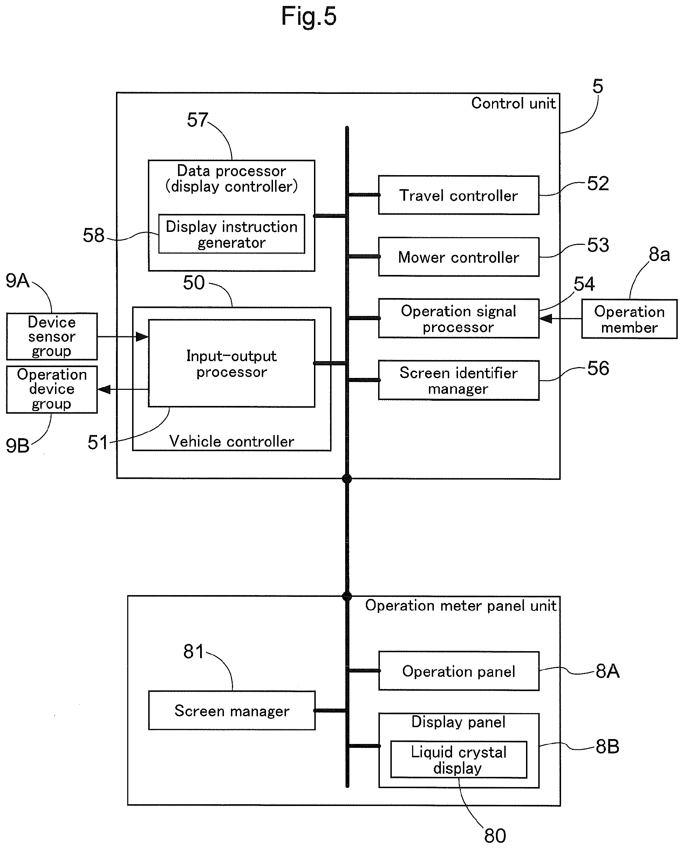

The work vehicle includes a control unit 5 including, as illustrated in Fig. 5, such control function sections as a vehicle controller 50, a travel controller 52, a mower controller 53, an operation signal processor 54, a screen identifier manager 56, and a data processor 57.

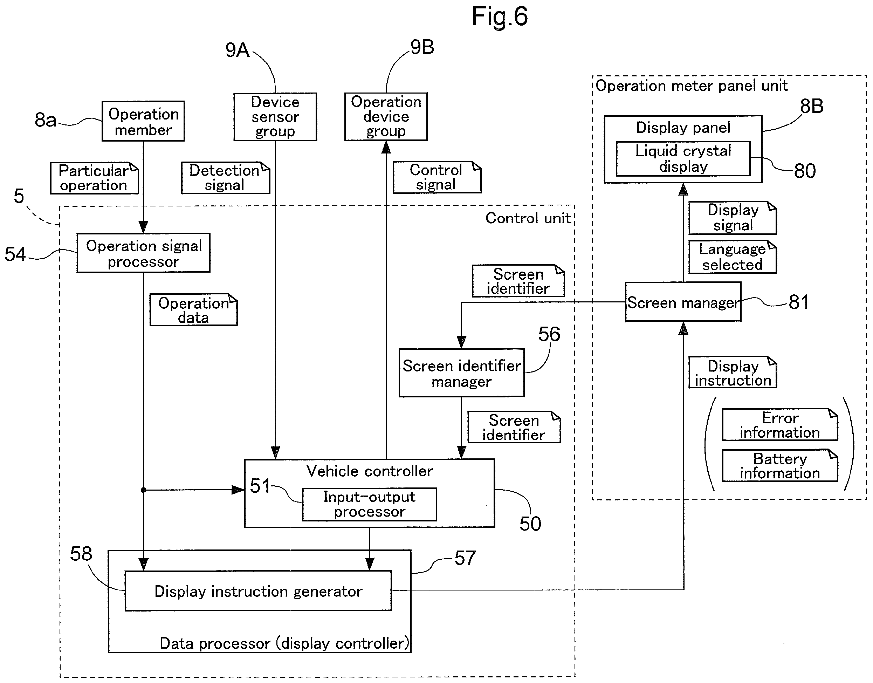

As illustrated in Figs. 5 and 6, the operation meter panel unit is connected to the control unit 5 through a data communication line such as an in-vehicle LAN. The operation meter panel unit includes hardware such as an operation panel 8A and a display panel 8B (which includes a liquid crystal display 80) as well as a screen manager 81 including either or both of an electronic circuit and software programs. The display panel 8B (essentially, the liquid crystal display 80) is configured to display as a selected screen an information display screen selected from among two or more information display screens in a screen set (detailed later). The set of information display screens are divided into two or more groups according to the purpose of display, each group including information display screens assigned with a common screen identifier. The screen manager 81 is configured to provide the screen identifier manager 56 with the screen identifier assigned to a selected screen during a screen transition process.

The vehicle controller 50 is configured to control in-vehicle devices on the basis of the state of the work vehicle. The vehicle controller 50 includes an input-output processor 51 connected to such components as a device sensor group 9A configured to detect various states of the work vehicle and an operation device group 9B including various operation devices mounted on the work vehicle. The input-output processor 51 is configured to receive a detection signal, convert the detection signal as necessary, and transmit the resulting signal to an appropriate control function section.

The travel controller 52 is configured to generate a motor control signal on the basis of a signal from a control function section cooperating with the travel controller 52 and drive the travel motor inverters 4A to control how the left and right travel motors 41 and 42 are driven independently of each other. The mower controller 53 is configured to generate a motor control signal on the basis of a signal from a control function section cooperating with the mower controller 53 and drive the mower motor inverter 4B to control how the mower motor 43 is driven.

As illustrated in Fig. 6, the operation signal processor 54 is configured to receive an operation signal, generate operation data on the basis of the operation signal, and transmit the operation data to an appropriate control function section. The operation signal is one from the operation member 8a, which is for use to operate information displayed on the display panel 8B, or one from another operable device (not illustrated in the drawings). The former is, for example, a particular operation signal indicative of a particular operation, whereas the latter is, for example, a special operation signal indicative of a special operation.

The data processor 57 is configured to process various pieces of data in the control unit 5, and to serve also as a display controller, includes a display instruction generator 58. The display instruction generator 58 is configured to receive (i) information on a screen identifier from the screen identifier manager 56 through the vehicle controller 50 and (ii) operation data from the operation signal processor 54, generate from the screen identifier and the operation data a display instruction including information to be displayed, and transmit the display instruction to the screen manager 81. The screen manager 81 is configured to determine an information display screen on the basis of the display instruction, generate a display signal for displaying the information display screen, and transmit the display signal to the display panel 8B. This causes the display panel 8B to display a newly selected screen.

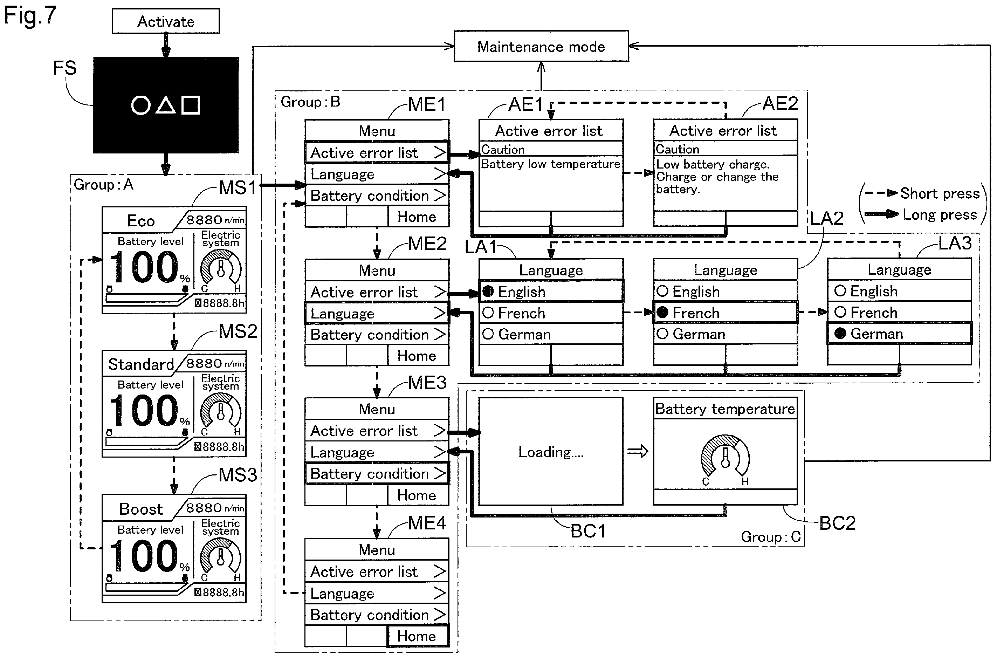

The control unit 5 causes the input-output processor 51, the operation signal processor 54, the screen identifier manager 56, and the display instruction generator 58 to operate appropriately to manage a screen transition process at the display panel 8B. Fig. 7 illustrates how a screen on the display panel 8B (that is, the liquid crystal display 80) transitions during the screen transition process.

The operation member 8a for the present embodiment is a push switch configured to receive particular operations categorized by the press time into a first particular operation (that is, a long press) and a second particular operation (that is, a short press) for generating respective particular operation signals different from each other. Fig. 7 illustrates a transition diagram that shows arrows with extra thick lines to each indicate a transition initiated by a long press and arrows with perforated lines to each indicate a transition initiated by a short press.

Fig. 7 shows a set of information display screens divided into Groups A, B, and C. Group A includes information display screens each assigned with screen identifier "A". Group B includes information display screens each assigned with screen identifier "B". Group C includes information display screens each assigned with screen identifier "C". Alternatively, each information display screen may be assigned with a unique screen identifier, in which case each information display screen is preferably assigned with such a screen identifier as "A001" or "B003" for further identification of the group. The present embodiment is configured such that Group A is a prioritized group including information display screens highest in the hierarchy, meaning that an information display screen of Group A transitions to an information display screen of Group B or C (that is, lower in the hierarchy).

Activating the work vehicle causes the display panel 8B to display an initial screen FS, which then transitions to an information display screen for a work vehicle operation mode as a prioritized screen. Fig. 7 illustrates an example set of information display screens for setting a work vehicle operation mode, namely an eco-friendly mode screen MS1, a standard screen MS2, and a boost screen MS3. They are selectable in a looping sequence by a short press of the operation member 8a.

Long-pressing the operation member 8a causes an information display screen of Group A to transition to a screen ME1 as a top information display screen of Group B. The screen ME1 includes two or more (specifically, three) selectable items, namely "Active error list", "Language", and "Battery condition", with "Active error list" defaulted and thus highlighted.

Short-pressing the operation member 8a with the screen ME1 displayed causes the screen ME1 to transition to a screen ME2 as an information display screen including the selectable items with "Language" selected and thus highlighted. Short-pressing the operation member 8a with the screen ME2 displayed causes the screen ME2 to transition to a screen ME3 as an information display screen including the selectable items with "Battery condition" selected and thus highlighted. Short-pressing the operation member 8a with the screen ME3 displayed causes the screen ME3 to transition to a screen ME4 as a return screen with "Home" highlighted. Short-pressing the operation member 8a with the screen ME4 displayed causes the screen ME4 to transition to the screen ME1.

Long-pressing the operation member 8a with the screen ME1 displayed causes the screen ME1 to transition to a screen AE1, which shows information related to "Active error list", that is, a brief description of "Active error list". Short-pressing the operation member 8a with the screen AE1 displayed causes the screen AE1 to transition to a screen AE2 that shows a detailed description of "Active error list". Short-pressing the operation member 8a with the screen AE2 displayed causes the screen AE2 to transition to the screen AE1. Long-pressing the operation member 8a with the screen AE1 or AE2 displayed causes the screen AE1 or AE2 to transition back to the screen ME1.

Long-pressing the operation member 8a with the screen ME2 displayed causes the screen ME2 to transition to a screen LA1, which shows information related to "Language" with "English" selected and thus highlighted with a black dot. Short-pressing the operation member 8a with the screen LA1 displayed causes the screen LA1 to transition to a screen LA2 with "French" selected and thus highlighted with a black dot. Short-pressing the operation member 8a with the screen LA2 displayed causes the screen LA2 to transition to a screen LA3 with "German" selected and thus highlighted with a black dot. Short-pressing the operation member 8a with the screen LA3 displayed causes the screen LA3 to transition to the screen LA1. Long-pressing the operation member 8a with the screen LA1, LA2, or LA3 displayed causes the screen LA1, LA2, or LA3 to transition back to the screen ME2.

Long-pressing the operation member 8a with the screen ME3 displayed causes the control unit 5 to perform a process of causing the display panel 8B to display information related to "Battery condition". This process requires time to load data, during which the display panel 8B displays a screen BC1 ("Loading..."). In response to the end of the data loading, the display panel 8B starts to display a screen BC2, which shows a graph of the temperature of the battery 6. Long-pressing the operation member 8a with the screen BC2 displayed causes the screen BC2 to transition back to the screen ME3. The display panel 8B may alternatively display information on the remaining charge of the battery 6 instead of its temperature, or further alternatively display information on the temperature of the battery 6 and its remaining charge sequentially.

The present embodiment is configured such that the screens MS1 to MS3 belong to Group A, that the screens ME1 to ME4, AE1, AE2, and LA1 to LA3 belong to Group B, and that the screens BC1 and BC2 belong separately to Group C as they involve data loading.

Fig. 7 illustrates screens for a maintenance mode, which is activated with a special operation signal generated by a special operation performed on a screen of Group A, B, or C with use of a special operation member. The maintenance mode is, in other words, activated with a hidden command, that is, a command hidden from the general user.

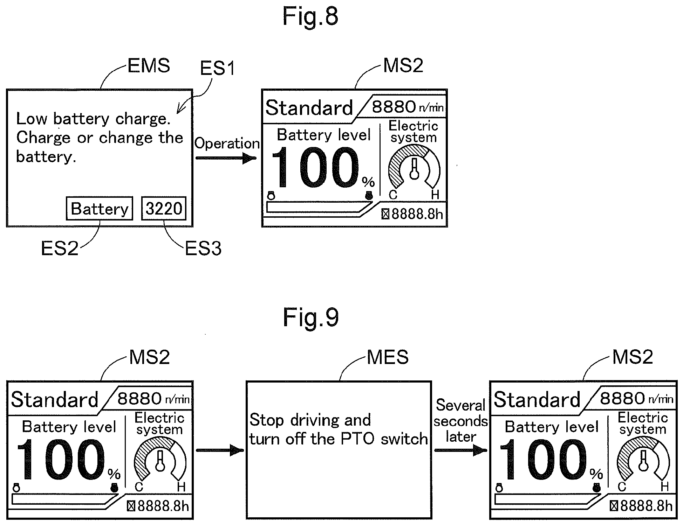

In response to an error in the work vehicle, the control unit 5 causes the display panel 8B to display an error message screen EMS over the entire liquid crystal display 80 as illustrated in Fig. 8 and turns on a corresponding lamp (not illustrated in the drawings). The error message screen EMS has an error message display area ES1 for displaying information on, for example, the type of error and how to address the error, an error location display area ES2 for displaying information on the location of the error, and an error code display area ES3 displaying an error code. The error message screen EMS may be hidden by a press of a predetermined button, but may be displayed again in an error checking mode as long as the error remains. In the case of multiple errors, long-pressing or short-pressing the operation member 8a causes the display panel 8B to display respective error message screens EMS sequentially.

Looking closely at the display panel 8B while driving the work vehicle is unsafe. The display panel 8B may be configured to display a warning if the driver performs an operation on a screen while driving the work vehicle. For instance, as illustrated in Fig. 9, the display panel 8B may be configured to, if the driver performs an operation on a screen while driving the work vehicle to perform work, transition from a normal screen (for example, the screen MS2) to a warning screen MES that shows the message "Stop driving and turn off the PTO switch" and return to the normal screen (for example, the screen MS2) several seconds later.

### Alternative Embodiments

(1) The embodiment described above is an electric mower as a work vehicle. The present invention is also applicable to, for example, mowers drivable by an internal combustion engine, work vehicles other than mowers such as agricultural work vehicles, earthmoving work vehicles, and construction work vehicles, and utility vehicles.
(2) The embodiment described above is configured such that the display panel 8B includes a liquid crystal display 80. The display panel 8B may alternatively include another display device or a projector.
(3) The embodiment described above is configured such that long-pressing and short-pressing the operation member 8a generates respective particular operation signals different from each other. The work vehicle may alternatively include two or more operable devices to generate different particular operation signals.
(4) Figs. 5 and 6 each show rectangles each indicative of respective functional blocks. The arrangement of the functional blocks is merely for the purpose of description: Two or more separate functional blocks may be combined into a single functional block, whereas a single functional block may be divided into two or more separate functional blocks.

### Industrial Applicability

The present invention is applicable to any technique for displaying information with use of multiple screens for a work vehicle.

## Claims

1. A screen transition control system for sequentially displaying items of information on a work vehicle,
the screen transition control system comprising:
an operation signal processor (54) configured to generate operation data based on at least one particular operation of an operation member (8a);
a display panel (8B) configured to display as a selected screen an information display screen selected from among a plurality of information display screens in a screen set;
a screen manager (81) configured to provide a screen identifier manager (56) with a screen identifier assigned to the selected screen; and
a display instruction generator (58) configured to generate, based on the screen identifier from the screen identifier manager (56) and the operation data, a display instruction including information to be displayed,
the screen manager being further configured to provide the display panel (8B) with a display signal for displaying an information display screen determined based on the display instruction.

2. The screen transition control system according to claim 1, wherein
the plurality of information display screens are divided into a plurality of groups (A, B, C) according to a purpose of display,
each of the plurality of groups (A, B, C) including a plurality of information display screens assigned with a common screen identifier.

3. The screen transition control system according to claim 2, wherein
the plurality of groups (A, B, C) include a prioritized group including a plurality of prioritized screens prioritized at a start of the screen transition control system, and
one of the plurality of prioritized screens that has been selected as the selected screen allows selection of an operation mode for the work vehicle.

4. The screen transition control system according to any one of claims 1 to 3, wherein
the at least one particular operation includes a first particular operation and a second particular operation both on a single selected screen,
the first particular operation causing the display panel (8B) to display a first selected screen, the second particular operation causing the display panel (8B) to display a second selected screen different from the first selected screen.

5. The screen transition control system according to claim 4, wherein
the operation member (8a) is a single push switch, and
the screen transition control system is configured to discriminate between the first particular operation and the second particular operation based on a length of time during which the operation member (8a) is pressed.

6. The screen transition control system according to any one of claims 1 to 5, wherein
the screen identifier manager (56) and the display instruction generator (58) are included in a control unit (5) connected to a group of sensors and a group of devices, and
the display panel (8B) and the screen manager (81) are included in an operation meter panel unit connected to the control unit (5) in such a manner as to be capable of exchanging data with the control unit (5).

7. A work vehicle, comprising:
a screen transition control system according to any one of claims 1 to 6.

## Patentansprüche

1. System zum Steuern von Bildschirmübergängen, um der Reihe nach Informationen über ein Arbeitsfahrzeug anzuzeigen,
wobei das System zum Steuern von Bildschirmübergängen umfasst:
einen Betriebssignalprozessor (54), der dazu konfiguriert ist, Betriebsdaten basierend auf mindestens einer bestimmten Betätigung eines Betriebselements (8a) zu generieren;
ein Anzeigefeld (8B), das dazu konfiguriert ist, als einen ausgewählten Bildschirm einen Informationsanzeigebildschirm anzuzeigen, der aus einer Vielzahl von Bildschirmen zum Anzeigen von Informationen in einem Satz von Bildschirmen ausgewählt wird;
einen Bildschirm-Manager (81), der dazu konfiguriert ist, einem Bildschirmkennungs-Manager (56) eine Bildschirmkennung bereitzustellen, die dem ausgewählten Bildschirm zugeteilt ist; und
einen Anzeigeanweisungsgenerator (58), der dazu konfiguriert ist, basierend auf der Bildschirmkennung aus dem Bildschirmkennungs-Manager (56) und den Betriebsdaten eine Anzeigeanweisung zu generieren, die anzuzeigende Informationen umfasst,
wobei der Bildschirm-Manager ferner dazu konfiguriert ist, dem Anzeigefeld (8B) ein Anzeigesignal bereitzustellen, um einen bestimmten Informationsanzeigebildschirm basierend auf der Anzeigeanweisung anzuzeigen.

2. System zum Steuern von Bildschirmübergängen nach Anspruch 1, wobei
die Vielzahl von Bildschirmen zum Anzeigen von Informationen in eine Vielzahl von Gruppen (A, B, C) gemäß einem Zweck der Anzeige unterteilt ist,
jede der Vielzahl von Gruppen (A, B, C) eine Vielzahl von Bildschirmen zum Anzeigen von Informationen umfasst, denen eine gemeinsame Bildschirmkennung zugeteilt ist.

3. System zum Steuern von Bildschirmübergängen nach Anspruch 2, wobei
die Vielzahl von Gruppen (A, B, C) eine priorisierte Gruppe umfasst, die eine Vielzahl von priorisierten Bildschirmen umfasst, die beim Starten des Systems zum Steuern von Bildschirmübergängen priorisiert werden, und
einer der Vielzahl von priorisierten Bildschirmen, der als der ausgewählte Bildschirm ausgewählt wurde, die Auswahl eines Betriebsmodus für das Arbeitsfahrzeug ermöglicht.

4. System zum Steuern von Bildschirmübergängen nach einem der Ansprüche 1 bis 3, wobei
die mindestens eine bestimmte Betätigung eine erste bestimmte Betätigung und eine zweite bestimmte Betätigung, beide auf einem einzigen ausgewählten Bildschirm, umfasst,
wobei die erste bestimmte Betätigung bewirkt, dass das Anzeigefeld (8B) einen ersten ausgewählten Bildschirm anzeigt, wobei die zweite bestimmte Betätigung bewirkt, dass das Anzeigefeld (8B) einen zweiten ausgewählten Bildschirm anzeigt, der anders als der erste ausgewählte Bildschirm ist.

5. System zum Steuern von Bildschirmübergängen nach Anspruch 4, wobei
das Bedienungselement (8a) ein Einmal-Druckschalter ist, und
das System zum Steuern von Bildschirmübergängen dazu konfiguriert ist, zwischen der ersten bestimmten Betätigung und der zweiten bestimmten Betätigung basierend auf einem Zeitraum, in dem das Bedienungselement (8a) gedrückt wird, zu unterscheiden.

6. System zum Steuern von Bildschirmübergängen nach einem der Ansprüche 1 bis 5, wobei
der Bildschirmkennungs-Manager (56) und der Anzeigeanweisungsgenerator (58) in einer Steuereinheit (5) enthalten sind, die mit einer Gruppe von Sensoren und einer Gruppe von Vorrichtungen verbunden ist, und
das Anzeigefeld (8B) und der Bildschirm-Manager (81) in einer Einheit mit einem Betriebsmessstellenfeld enthalten sind, die mit der Steuereinheit (5) derart verbunden ist, dass sie Daten mit der Steuereinheit (5) austauschen kann.

7. Arbeitsfahrzeug, umfassend:
ein System zum Steuern von Bildschirmübergängen nach einem der Ansprüche 1 bis 6.

## Revendications

1. Système de commande de transition d'écran pour afficher séquentiellement des éléments d'informations sur un véhicule de travail,
le système de commande de transition d'écran comprenant :
un processeur de signal d'actionnement (54) configuré pour générer des données d'actionnement sur la base d'au moins un actionnement particulier d'un élément d'actionnement (8a) ;
un panneau d'affichage (8B) configuré pour afficher comme écran sélectionné un écran d'affichage d'informations sélectionné parmi une pluralité d'écrans d'affichage d'informations d'un ensemble d'écrans ;
un gestionnaire d'écran (81) configuré pour fournir à un gestionnaire d'identifiant d'écran (56) un identifiant d'écran attribué à l'écran sélectionné ; et
un générateur d'instructions d'affichage (58) configuré pour, sur la base de l'identifiant d'écran provenant du gestionnaire d'identifiant d'écran (56) et des données d'actionnement, générer une instruction d'affichage comportant des informations à afficher,
le gestionnaire d'écran étant en outre configuré pour fournir au panneau d'affichage (8B) un signal d'affichage pour afficher un écran d'affichage d'informations déterminé sur la base de l'instruction d'affichage.

2. Système de commande de transition d'écran selon la revendication 1, dans lequel
la pluralité d'écrans d'affichage d'informations est divisée en une pluralité de groupes (A, B, C) selon un objectif d'affichage,
chacun de la pluralité de groupes (A, B, C) comportant une pluralité d'écrans d'affichage d'informations auxquels est attribué un identifiant d'écran commun.

3. Système de commande de transition d'écran selon la revendication 2, dans lequel
la pluralité de groupes (A, B, C) comporte un groupe prioritaire comportant une pluralité d'écrans prioritaires qui ont eu la priorité au démarrage du système de commande de transition d'écran, et
l'un de la pluralité d'écrans prioritaires qui a été sélectionné comme écran sélectionné permet la sélection d'un mode d'actionnement pour le véhicule de travail.

4. Système de commande de transition d'écran selon l'une quelconque des revendications 1 à 3, dans lequel
l'au moins un actionnement particulier comporte un premier actionnement particulier et un deuxième actionnement particulier tous deux sur un seul écran sélectionné,
le premier actionnement particulier amenant le panneau d'affichage (8B) à afficher un premier écran sélectionné, le deuxième actionnement particulier amenant le panneau d'affichage (8B) à afficher un deuxième écran sélectionné différent du premier écran sélectionné.

5. Système de commande de transition d'écran selon la revendication 4, dans lequel
l'élément d'actionnement (8a) est un bouton à simple pression, et
le système de commande de transition d'écran est configuré pour distinguer entre le premier actionnement particulier et le deuxième actionnement particulier sur la base d'une durée pendant laquelle l'élément d'actionnement (8a) est enfoncé.

6. Système de commande de transition d'écran selon l'une quelconque des revendications 1 à 5, dans lequel
le gestionnaire d'identifiant d'écran (56) et le générateur d'instructions d'affichage (58) sont inclus dans une unité de commande (5) connectée à un groupe de capteurs et à un groupe de dispositifs, et
le panneau d'affichage (8B) et le gestionnaire d'écran (81) sont inclus dans une unité de panneau de compteur d'actionnements connectée à l'unité de commande (5) de manière à pouvoir échanger des données avec l'unité de commande (5).

7. Véhicule de travail, comprenant :
un système de commande de transition d'écran selon l'une quelconque des revendications 1 à 6.
